# EUROPÄISCHE PATENTSCHRIFT

(11) **EP 2 260 530 B1**
(45) Veröffentlichungstag und Bekanntmachung des Hinweises auf die Patenterteilung: **04.04.2012**
(21) Anmeldenummer: 09720824.3
(22) Anmeldetag: 18.02.2009
(51) Int. Cl.: H01M 8/02, B23K 1/00, B23K 1/008, F16J 15/06, F16J 15/10, H01M 8/12

(54) **DICHTUNGSANORDNUNG FÜR HOCHTEMPERATUR-BRENNSTOFFZELLENSTAPEL**
SEALING ARRANGEMENT FOR HIGH-TEMPERATURE FUEL CELL STACK
DISPOSITIF D'ÉTANCHÉITÉ POUR UN EMPILEMENT DE PILES À COMBUSTIBLE À HAUTE TEMPÉRATURE

(30) Priorität: 08.03.2008 DE 102008013281
(43) Veröffentlichungstag der Anmeldung: 15.12.2010
(73) Patentinhaber: Forschungszentrum Jülich GmbH, 52425 Jülich (DE)
(72) Erfinder: ZERFASS, Hans-Rainer, 65232 Taunusstein (DE); FEDERMANN, Dirk, 47623 Kevelaer (DE)
(86) Internationale Anmeldenummer: PCT/DE2009/000221
(87) Internationale Veröffentlichungsnummer: WO 2009/112005

(56) Entgegenhaltungen:
- DE-A1-102004 047 539
- DE-A1-102005 048 213
- DE-A1-102006 039 339
- US-A1- 2003 132 270
- US-B1- 6 410 161

## Beschreibung

Die Erfindung betrifft ein Hochtemperatur-Brennstoffzellensystem, insbesondere eine Dichtungsanordnung für einen Brennstoffzellenstapel (Stack) mit oxidkeramischen Elektrolyten (SOFC = Solid Oxid Fuel Cell) sowie ein Verfahren zu dessen Herstellung.

### Stand der Technik

Brennstoffzellen sind elektrische Stromquellen, in denen durch elektrochemische Oxidation einer leicht oxidierbaren Substanz, meist Wasserstoff mit Sauerstoff, chemische Energie in elektrische Energie umgewandelt wird. Aufgrund der geringen Spannung, die eine einzelne Brennstoffzelle liefert, werden in der Regel viele Brennstoffzellen über so genannte Interkonnektoren zur Steigerung der elektrischen Leistung in Reihe geschaltet und dabei elektrisch isolierend mit Glaslot verbunden und abgedichtet. Diese werden dann Brennstoffzellenstapel oder auch Stack genannt. Die einzelnen Zellebenen, das heißt die keramischen Zellen mit dem metallischen Interkonnektor, werden auch Kassetten genannt. Beim Stapelaufbau ist es erforderlich, die einzelnen Kassetten längs einer Stapelrichtung nicht nur elektrisch isoliert, sondern auch gasdicht aufeinander zu fügen. Es ist notwendig, die Brenngaskanäle des Brennstoffzellenstapels gasdicht von den Oxidationsmittelräumen der Brennstoffzelleneinheiten und die Oxidationsmittelkanäle des Brennstoffzellenstapels von den Brennstoffzelleneinheiten zu trennen. Die Gasversorgungsöffnungen in den Kassetten werden hierbei gleichzeitig durch die aufgebrachten Dichtungen miteinander verbunden.

Die Betriebstemperatur eines Hochtemperatur - Brennstoffzellenstapels (SOFC - Stacks) liegt im Bereich von 700 bis 900 °C. Ein SOFC - Stack mit planaren Brennstoffzellen besteht üblicherweise aus keramischen Zellen und metallischen Interkonnektoren. Die keramische Zelle ist dabei in einem metallischen Rahmen eingebaut, der wiederum mit dem Interkonnektor verbunden ist. Bei bekannten Brennstoffzellenstapeln werden Dicht- und Isolationselemente aus Glaslot oder aus keramischen Dichtmaterialien verwendet, um die erforderliche elektrische Isolationswirkung und die erforderliche Gasdichtigkeit zu bewirken.

Es ist in der Regel zweckmäßig, Abdichtung und elektrische Isolation voneinander zu trennen. Die elektrische Isolierung kann in einem solchen Fall, beispielsweise durch ein Keramikelement, vorgenommen werden, welches durch Verlötung mit den Blechteilen verbunden wird. Durch eine gasdichte Verlötung wird hierbei gleichzeitig die Abdichtung der Gasversorgungsöffnungen bewerkstelligt. Hierbei besteht die Möglichkeit, die Keramik im Vakuum durch Einsatz von Aktivloten direkt mit den Stahlbauteilen zu verlöten.

Da bei der Fügung der Stackebenen bzw. der Kassetten miteinander die keramischen Zellen regelmäßig schon in die entsprechenden Fügepartner integriert sind, ist bei einer Lötung eine irreversible Schädigung der Zelle im Vakuum durch thermo-chemische Vorgänge (Reduktion) möglich. Deshalb sollte im Beisein der Zelle stets unter oxidierender Atmosphäre, beispielsweise Luft, gefügt werden.

Nach dem Stand der Technik können für diese Fügung in Luft auch Silberbasislote verwendet werden. Diese Lote gestatten das Löten an Luft, wenn sie Beimengungen von Zusätzen, wie z. B. Kupferoxid, enthalten, die die Benetzung fördern. Diese Lote werden dann als RAB-Lote (Reactive Air Brazing) bezeichnet.

Je nach Herstellung der Isolationskeramik kann diese Poren bzw. Spalten aufweisen. Dies ist beispielsweise dann der Fall, wenn die Keramikschicht durch einen thermischen Spritzprozess auf die zu isolierenden Metallteile aufgebracht wird. Je nach Kapillaraktivität des verwendeten Lotes kann dieses dann in die vorhandenen Spalten eindringen und Kurzschlüsse verursachen. Dies ist insbesondere bei Silberloten der Fall.

Durch das Aufbringen von Sperrschichten auf die eigentliche Isolationsschicht kann das Eindringen des Lotes regelmäßig verhindert werden. Hierdurch wird jedoch das Beschichtungsverfahren aufwändiger als bei Verwendung von nur einer keramischen Isolationsschicht. Aus US 2007/0003811 A1 und US 2007/0065707 A1 ist es bekannt, als Sperrschichten Mischungen von Keramik mit Metallen einzusetzen und diese ebenfalls durch thermisches Spritzen aufzubringen.

Ebenso kann aber auch der Lotaustritt aus dem Fügespalt während des Lötprozesses zu einem Kurzschluss führen.

Die keramische Zelle besteht in der Regel aus Nickelcermet (Hauptanteil Zirkonoxid mit Nebenanteil Nickeloxid bzw. Nickel) und hat eine relativ gleichmäßige relative Wärmedehnung im Temperaturbereich von RT bis 1000 °C, d. h. einen temperaturunabhängigen thermischen Ausdehnungskoeffizienten von α = 12 x 10⁻⁶ K⁻¹. Der metallische Blechrahmen besteht überwiegend aus dem ferritischen Chromstahl (Fe mit 22% Cr und weiteren Spurenanteilen) und hat eine mit der Temperatur zunehmende relative Wärmedehnung. Der Ausdehnungskoeffizient steigt von α = 11 x 10⁻⁶ K⁻¹, bei tiefen Temperaturen auf α = 14 x 10⁻⁶ K⁻¹ bei 1000 °C.

Das Glaslot kann in der Regel nicht exakt in seinem Ausdehnungskoeffizienten mit dem Ausdehnungskoeffizienten des Stahls in Übereinstimmung gebracht werden. Aus WO 2006/086037 ist es jedoch bekannt, den thermischen Ausdehnungskoeffizienten von RAB-Loten, insbesondere durch Zusatz von Aluminiumtitanat, zu verringern und so besser an den eingesetzten Stahl anzupassen.

DE 102006 039339 A1 offenbart ein Metalllot zum Fügen von Elementen einer Festoxid-Brennstoffzelle, insbesondere von einer Keramik-Struktur mit einer metallischen Struktur derselben, und dabei insbesondere ein RAB-Lot oder ein ABA-Lot oder ein Nickel-basiertes Lot, wobei das Lot oder die Lotschicht Partikel oder Fasern oder eine Zwischenschicht enthält, deren thermischer Ausdehnungskoeffizient erheblich niedriger als derjenige des Lotmaterials ist.

DE 102005048213 A1 offenbart eine Dichtungsanordnung für einen Brennstoffzellenstapel, welche mindestens ein Gehäuseteil einer ersten Brennstoffzelleneinheit aus einem metallischen Material umfasst, das mit einer Beschichtung aus einem keramischen Material versehen ist, wobei das Gehäuseteil der ersten Brennstoffzelleneinheit an mindestens einer mit der Keramikbeschichtung versehenen Stelle mittels eines metallischen Lotes mit einem Gehäuseteil einer zweiten Brennstoffzelleneinheit verlötet ist.

Für die Verlötung der Keramikbeschichtung des Gehäuseteils der ersten Brennstoffzelleneinheit mit dem Gehäuseteil der zweiten Brennstoffzelleneinheit kann insbesondere ein Silberbasislot verwendet werden, welches bevorzugt einen Zusatz von Kupferoxid und gegebenenfalls auch einen Titanzusatz enthält.

In DE 102004047539 A1 wird eine ähnliche Konstruktion beschrieben, wobei die Dichtungsanordnung mindestens ein Zwischenelement aus einem metallischen Material umfasst, das mit einer Beschichtung aus einem keramischen Material versehen ist, und das Zwischenelement an mindestens einer mit der Keramikbeschichtung versehenen Stelle mittels eines metallischen Lotes mit einem Gehäuseteil einer ersten Brennstoffzelleneinheit verlötet und an mindestens einer anderen Stelle an einem Gehäuseteil einer zweiten Brennstoffzelleneinheit festgelegt ist.

Die US 2003/132270 A1 offenbart ein Verfahren zum Verbinden von metallischen und keramischen Werkstoffen, bei dem ein Lotmaterial zwischen einem metallischen Teil und einem keramischen Teil gestellt und das ganze in einer oxidierenden Atmosphäre erhitzt wird, wobei das Lotmaterial aus der Gruppe von Ag-CuO, Ag-V₂O₅ und Pt-Nb₂O₅, vorzugsweise 30,65 bis 100 % mol Ag in CuO, ausgewählt ist.

US-B1-6 410161 beschreibt eine metall-keramische Dichtungsanordnung, bei der eine Lotlegierung zwischen einem metallischen Teil und einem keramischen Teil gestellt wird, wobei die Lotlegierung in einer Au- oder Ni-basierten Legierung besteht.

Die Nachteile aus dem bekannten Stand der Technik lassen sich wie folgt zusammenfassen:
- Die verwendeten Lote (RAB) führen zu unkontrollierbaren Lotaustritten und Lotverläufen, woraus sich Kurzschlüsse, z. B. durch Brückenbildung zwischen den metallischen Bauelementen ergeben können.
- Bei den bisherigen Lötungen (RAB) entstehen relativ großvolumige Poren bzw. Porenansammlungen, die als Anrisspunkte die mechanische Belastbarkeit der Verbindung verringern und zu Leckagen führen (insbesondere bei offener Porosität).
- Durch die Kapillarität bzw. Reaktivität des Lotes kann es zur Infiltration, insbesondere in die Poren und Korngrenzen der Keramik kommen.
- Durch Zusammenziehen (Kohäsion) des Lotes und Benetzungsprobleme können Ungänzen in der Lotspur und somit Leckagen entstehen.

Somit sind derzeit häufig keine reproduzierbare, dichte und isolierende Verbindungen herzustellen.

### Aufgabe und Lösung

Der Erfindung liegt die Aufgabe zugrunde, eine Dichtungsanordnung bereit zu stellen, welche auch bei Temperaturen oberhalb von 400 °C, insbesondere oberhalb von 700 °C, eine ausreichende elektrische Isolationswirkung, eine ausreichende mechanische Festigkeit sowie die Möglichkeit einer gasdichten Abdichtung schafft.

Der Erfindung liegt zudem die Aufgabe zugrunde, eine Dichtungsanordnung, insbesondere für einen Hochtemperatur-Brennstoffzellenstapel zu schaffen, welche die vorgenannten Eigenschaften auch bei den üblichen Betriebstemperaturen einer solchen Brennstoffzelle aufweist.

Ferner ist es die Aufgabe der Erfindung, ein einfaches und kostengünstiges Verfahren zur Herstellung einer vorgenannten Dichtungsanordnung bereit zu stellen.

Die Aufgaben der Erfindung werden gelöst durch eine Dichtungsanordnung gemäß Hauptanspruch, sowie durch ein Verfahren zur Herstellung einer solchen Dichtungsanordnung gemäß Nebenanspruch. Vorteilhafte Ausgestaltungen des Verfahrens sowie der Dichtungsanordnung ergeben sich aus den jeweils rückbezogenen Ansprüchen.

### Gegenstand der Erfindung

Im Rahmen der Erfindung wurde gefunden, dass sich die Infiltration einer aus dem Stand der Technik bekannten keramischen Isolationsschicht durch eindringendes Lot bei thermisch gespritzten Schichten erstaunlicherweise deutlich vermindern lässt, wenn dem Lot Germanium oder besonders vorteilhaft Germanium und Silizium gleichzeitig in geeigneten Mengen zugesetzt werden.

Die erfindungsgemäße Dichtungsanordnung umfasst daher eine keramische Schicht sowie ein darauf angeordnetes Lotbasismaterial, welches einen Zusatz von Germanium aufweist. Die Anordnung wirkt elektrisch isolierend. Die dazu benötigten Mengen an Germanium können durch einen Fachmann durch wenige Versuche ermittelt werden, und liegen je nach Basislot und eingesetzter Keramik bevorzugt zwischen 0,1 und 5,0 Mol- %, insbesondere zwischen 0,5 und 2,5 Mol- %. Das zugesetzte Germanium weist insbesondere den Vorteil auf, dass es gleichzeitig die Porenbildung im Lot zurück drängt.

Bei einer vorteilhaften Ausgestaltung der Erfindung weist das Basislot Zugaben von Ge und Silizium auf, wobei der Anteil an Silizium im Ausgangslot bis zu 2,5 Mol-%, bevorzugt zwischen 0,1 und 0,9 Mol-% beträgt. Als besonders günstige Lotverbindungen haben sich Lote mit der Zusammensetzung Ag - 2CuO - 1,5Ge - 0,75Si oder Ag - 4CuO - 1,5Ge - 0,75Si herausgestellt.

Als besonders gut spreitungshemmend hat sich der Zusatz von Aluminiumtitanat erwiesen. Die Menge an zugegebenem Aluminiumtitanat, bezogen auf das Lot, wird hier regelmäßig in Vol.-% angegeben, lässt sich aber auch leicht in Gew.-% oder Mol-% umrechnen. Vorteilhafte Zugaben liegen im Bereich von 10 bis 40 Vol.-% Al₂TiO₅, bevorzugt zwischen 20 bis 30 Vol- %.

Das Aluminiumtitanat wird dem Lot in der Regel als besonders feines Pulver zugemischt, da es beim Aufbringen und Löten selbst nicht zum Aufschmelzen kommt, und so eine homogene Verteilung innerhalb der Lotmischung sichergestellt werden kann.

Die vorliegende Erfindung eignet sich für alle Verbindungen zwischen zwei metallischen Bauteilen, die elektrisch isolierend und dennoch gasdicht ausgestaltet werden müssen, insbesondere vorteilhaft für den Einsatz in einem Hochtemperatur-Brennstoffzellenstapel mit oxidkeramischen Elek-trolyten (SOFC = Solid Oxid Fuel Cell).

In einer speziellen Ausgestaltung der Erfindung weist die Dichtungsanordnung ein Reactive Air Brazing (RAB)-Lot als Lotbasismaterial auf. Im Rahmen dieser Erfindung ist darunter ein Ag-Basis-Lot zu verstehen, welches durch das Verfahren RAB (also Löten an Luft) und Hinzulegieren von benetzungsaktiven Additiven zum RAB-Lot geworden ist.

Vorteilhaft handelt es sich bei der keramischen Isolationsschicht um eine Schicht, die vorzugsweise über ein thermisches Spritzverfahren aufgebracht wurde. Bei dieser kann es sich um eine atmosphärisch plasmagepritzte, vakuumgespritzte oder auch um eine flammgespritzte Schicht handeln. Weitere geeignete Aufbringungsverfahren für die keramische Schicht wären daneben der Sol-Gel Prozess oder auch PVD mit anschließender Sinterung.

Vorteilhaft ist die keramische Isolationsschicht schon selbst möglichst dicht, so dass eine möglichst geringe Porosität vorliegt. Darunter ist zu verstehen, dass keine offene Porosität bis zum Substrat (metallisches Bauteil)vorliegt und die Leckrate dieser keramischen Schicht bei einem He-Lecktest insgesamt unter 10⁻³ mbar x 1 x s⁻¹ liegt.

Als weitere Ausgestaltung der geeigneten keramischen Schicht kann auch eine beidseitig eingelötete Folie genannt werden.

Die keramische Schicht weist insbesondere Nickeloxid, Zirkondioxid, Aluminiumoxid, Magnesiumoxid oder Siliziumoxid, oder eine Mischung der vorgenannten Oxide auf. In einer speziellen Ausgestaltung umfasst die keramische Schicht einen Aluminium-Magnesium-Spinell, wobei dieser optional auch noch zusätzlich mit einer Deckschicht aus einer Mischung aus Aluminium-Magnesium-Spinell und Titan bzw. einer Titanverbindung versehen sein kann.

Der besonders vorteilhafte Lot-Zusatz von Silizium und Germanium lässt sich einfach durch direktes Beimischen der entsprechenden metallischen Pulver zu dem Rohpulver der Lötbasis bewirken. Falls erforderlich, kann das so gemischte Lotpulver in einem Bindemittel suspendiert als Paste, z. B. durch Siebdruck oder mit einem Dispenser, aufgetragen werden.

Als Ausgangslotmaterial bieten sich Silberbasislote mit oder ohne Zusatz von Kupferoxid an, die zur Verkleinerung des Randwinkels, und damit zur besseren Benetzbarkeit führen. Beispiele für solche Silberbasislote sind (in Mol-%) Ag-4CuO oder Ag-8CuO.

Weiterhin haben sich Zusätze in Form von V₂O₅ und Ti, z. B. in Form von TiH₂, als vorteilhaft für die Benetzung der Keramik herausgestellt. Diese Verbindungen wirken hauptsächlich benetzend. Zur Herstellung der erfindungsgemäßen Lote wird ein inniges Gemenge der entsprechenden Komponenten in Pulverform verwendet. Aus diesem Gemenge bildet sich dann *in situ* die Lotlegierung. Bei Zusatz von Titanhydrid wandelt sich dies bei Temperaturen um 400 °C in metallisches Titan, bzw. an Luft in Titanoxid um.

Als Basis für die Lotlegierung ohne elementares Kupfer, dafür aber mit CuO und Titan, sind insbesondere auch folgende Zusammensetzungen geeignet (in Mol-%): Ag-4CuO-0,5TiH₂ oder Ag-8CuO-0,5TiH₂.

Eine Verbesserung des Lötprozesses kann zudem vorteilhaft durch Verminderung der Fließfähigkeit des Lotes im flüssigen Zustand (Spreiten) erreicht werden. Dies wird durch Zusatz eines geeigneten Keramikpulvers, z. B. Aluminiumtitanat, erzielt. Durch diese Maßnahme werden Kurzschlüsse durch austretendes Lot weitgehend vermieden.

Die Einflüsse der unterschiedlichen Lotzusätze können wie folgt zusammengefasst werden, wobei der Zusatz von Germanium für die Ausgestaltung des erfindungsgemäßen Lots zwingend ist:
- Bestandteile, die die Infiltration begrenzen (entnetzende Wirkung), z. B.: Si
- Bestandteile, die die Porenbildung verringern, z. B.: Ge
- Bestandteile, die die Benetzung in besonderer Weise beeinflussen (benetzend), z.B.: CuO, V₂O₅, Ti (Zusatz z. B. als TiH₂)
- Füllstoffe, die das Spreiten (Ausbreiten) des flüssigen Lotes verhindern, z. B.: Al₂ TiO₅.

Das Aufbringen des Lötmaterials auf die isolierende Keramikschicht zur Bildung der erfindungsgemäßen Dichtanordnung kann auf unterschiedliche Weise erfolgen.

Das Lötmaterial kann beispielsweise als Paste mittels eines Dispensers auf der Oberseite der isolierenden Keramikschicht aufgebracht werden. Alternativ kann die Auftragung des Lötmaterials durch ein Musterdruckverfahren, beispielsweise über ein Siebdruckverfahren, auf die isolierende Keramikschicht erfolgen. Ferner ist auch die Möglichkeit gegeben, das Lotmaterial in Form einer Lötfolie auf der Oberfläche der isolierenden Keramikschicht anzuordnen. Außerdem ist auch eine Applikation auf dem metallischen Fügepartner möglich.

Die Verwendung der besonderen Lotzusammensetzung innerhalb der Dichtungsanordnung führt regelmäßig zu reproduzierbar dichten und isolierenden Fügungen mit folgenden Eigenschaften:
- Lotaustritte werden vermieden und Lotverläufe verringert, die Porosität im Lot (überwiegend Einzelporen bzw. schmale Porenzeilen) wird deutlich verringert,
- die Lötverbindungen weisen einen ausreichenden elektrischen Widerstand auf,
- die Lötverbindungen sind regelmäßig ausreichend gasdicht, das bedeutet eine Leckrate kleiner als 10⁻³ mbar*1*s⁻¹ (He-Lecktest).

### Spezieller Beschreibungsteil

Bei der folgenden Beschreibung spezieller Ausgestaltungen der Erfindung besteht die Isolationsschicht der Dichtungsanordnung für einen Hochtemperatur-Brennstoffzellenstapel beispielhaft aus mehreren Lagen thermisch aufgespritzter Keramik, z. B. aus einem Aluminium-Magnesium-Spinell mit einer Schichtdicke von insgesamt 20 µm bis 150 µm, bevorzugt 30 µm bis 70 µm.

Die erfindungsgemäßen Lote für die Dichtungsanordnung wurden durch sorgfältige und innige Mischung der entsprechenden Rohstoffpulver hergestellt. Falls erforderlich, können die Lotpulver in einem Bindemittel suspendiert als Paste z. B. durch Siebdruck oder mit einem Dispenser aufgetragen werden. Als Ausgangslote wurden Silberbasislote eingesetzt.

Korngrößen der eingesetzten Rohpulver:

| | |
|---|---|
| Ag | 0,7 - 1,3 µm |
| CuO | 30 - 50 nm |
| Ge | < 140 µm (zusätzlich im Mörser gemahlen) |
| Si | 0,07 - 0,10 µm |
| Al₂TiO₅ | ca. 10 µm (zusätzlich im Mörser gemahlen) |

Die Stoffmengenanteile sind in Mol-% angegeben, für Silberbasislot:

| | |
|---|---|
| Ag-2CuO | Ag-4CuO |

Untersuchte Beispiele eines Lots mit vermindertem Infiltrationsvermögen:

| | | |
|---|---|---|
| Ag-2CuO-1,5Ge-0,75Si, | Ag-4CuO-1,5Ge-0,75Si, | Ag-2CuO-1,5Ge-0,5Si, |
| Ag-1CuO-2Ge, | Ag-1,5Ge | |

Untersuchte Beispiele von Loten mit vermindertem Infiltrationsvermögen und verminderter Spreitungsneigung:

| | |
|---|---|
| Ag - 2CuO - 1,52Ge - 0,75Si | + 20 Vol.-% Al₂TiO₅ |
| Ag - 2CuO - 1,52Ge - 0,75Si | + 30 Vol.-% Al₂TiO₅ |
| Ag - 4CuO - 1,52Ge - 0, 75Si | + 20 Vol.-% Al₂TiO₅ |
| Ag - 4CuO - 1,52Ge - 0, 75Si | + 30 Vol.-% Al₂TiO₅ |
| Ag - 2CuO - 1,52Ge - 0,5Si | + 20 Vol.-% Al₂TiO₅ |
| Ag - 2CuO - 1,52Ge - 0,5Si | + 30 Vol.-% Al₂TiO₅ |
| Ag - 1CuO - 2Ge | + 20 Vol.% Al₂TiO₅ |
| Ag - 1CuO - 2Ge | + 30 Vol.-% Al₂TiO₅ |
| Ag - 1,52Ge | + 20 Vol.-% Al₂TiO₅ |
| Ag - 1,52Ge | + 30 Vol.-% Al₂TiO₅ |

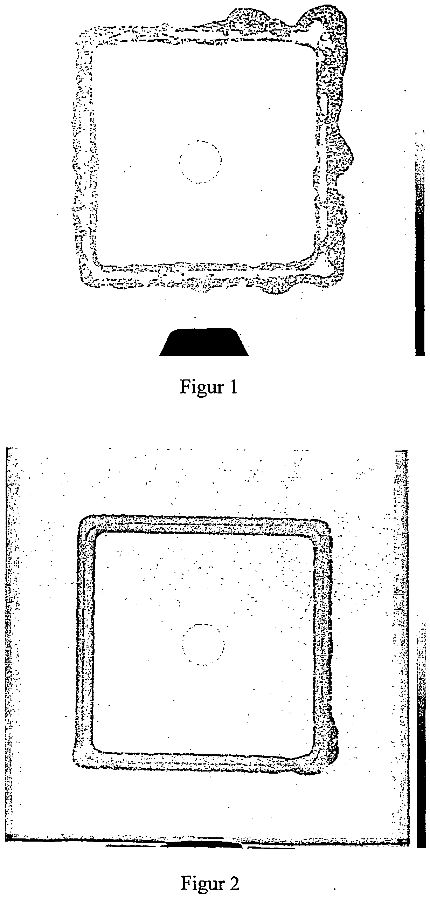

Nachfolgend werden zwei der vorgenannten Untersuchungsergebnisse exemplarisch gegenübergestellt, die die Vorteile der Erfindung eindeutig wiedergeben. Es handelt sich dabei um zwei Metall-Keramik-Lötverbunde, die mit invertierten Durchstrahlungsaufnahmen von Kleinproben verglichen werden:
Probe Nr. V105: "Standard" (Figur 1)
   Metallische Komponente: Crofer22APU, 0,5 mm dick,
   Keramische Komponente: Substrat Crofer 22APU, 0,5 mm mit einer VPS-Beschichtung Al-Mg-Spinell und einer Deckschicht aus einer Mischung von Al-Mg-Spinell und Titanhydrid.
   Lot: Ag 4 CuO (Paste)
   Lötergebnis: Dicht und isolierend, zeigt jedoch nachteilig einen deutlichen Lotverlauf und eine gewisse Porosität.
Probe Nr. V 135: "Erfindungsgemäß" (Figur 2)
   Metallische Komponente: Crofer 22APU, 0,5 mm dick,
   Keramische Komponente: Substrat Crofer22APU, 0,5 mm mit einer VPS-Beschichtung Al-Mg-Spinell
   Lot: Ag - 4CuO - 1,52Ge - 0, 75Si + 20 Vol.-% Al₂TiO₅ (Paste)
Lötergebnis: Dicht und isolierend, zeigt zudem kaum Lotverlauf und eine nur geringe Porosität.

## Patentansprüche

1. Dichtungsanordnung für metallische Bauteile, wobei die Dichtungsanordnung eine elektrische Isolationswirkung aufweist,
**dadurch gekennzeichnet,**
**dass** die Dichtungsanordnung eine keramische Schicht sowie ein darauf angeordnetes Lotbasismaterial umfasst, welches einen Zusatz von Germanium aufweist.

2. Dichtungsanordnung nach Anspruch 1, mit einem Zusatz von Germanium im Bereich von 0,1 bis 5,0 Mol-%, bevorzugt zwischen 0,5 und 2,5 Mol-%.

3. Dichtungsanordnung nach Anspruch 1 oder 2, mit einem weiteren Zusatz von Silizium oder mit einem weiteren Zusatz von Aluminiumtitanat.

4. Dichtungsanordnung nach einem der Ansprüche 1 bis 3, umfassend ein Lot mit der Zusammensetzung Ag-2CuO-1,5Ge-0,75Si oder Ag-4CuO-1,5Ge-0,75Si oder ein Reactive Air Brazing (RAB)-Lot.

5. Dichtungsanordnung nach einem der Ansprüche 1 bis 4, mit einer, durch ein thermisches Spritzverfahren, durch Sol-Gel oder durch PVD und anschließendem Sintern aufgebrachten, keramischen Schicht.

6. Dichtungsanordnung nach einem der Ansprüche 1 bis 5, mit einer beidseitig eingelöteten Folie als keramische Schicht.

7. Dichtungsanordnung nach einem der Ansprüche 1 bis 6, mit einer keramischen Schicht umfassend Nickeloxid, Zirkondioxid, Aluminiumoxid, Magnesiumoxid oder Siliziumoxid, oder eine Mischung der vorgenannten Oxide, oder umfassend einen Aluminium-Magnesium-Spinell.

8. Dichtungsanordnung nach Anspruch 7, mit einer auf der keramischen Schicht angeordneten Deckschicht aus einer Mischung aus Aluminium-Magnesium-Spinell und Titan bzw. aus einer Titanverbindung.

9. Verwendung einer Dichtungsanordnung nach einem der Ansprüche 1 bis 9, in einem Brennstoffzellenstapel, insbesondere in einem Hochtemperatur-Brennstoffzellenstapel.

10. Herstellung einer Dichtungsanordnung für einen Brennstoffzellenstapel, umfassend eine keramische Schicht sowie ein Lot, wobei die Dichtungsanordnung eine elektrische Isolationswirkung aufweist,
**dadurch gekennzeichnet,**
**dass** ein Lot auf der keramischen Schicht angeordnet wird, welches neben einem Lotbasismaterial einen Zusatz von Germanium aufweist.

11. Herstellung nach Anspruch 10, bei dem ein Lot mit einem Zusatz von Germanium im Bereich von 0,1 bis 5,0 mol-%, bevorzugt zwischen 0,5 und 2,5 Mol-%, eingesetzt wird.

12. Herstellung nach einem der Ansprüche 10 bis 11, bei der ein Lot eingesetzt wird, welches einen weiteren Zusatz von Silizium aufweist, oder ein Reactive Air Brazing (RAB)-Lot, oder ein Lot mit der Zusammensetzung Ag-2CuO-1,5Ge-0,75Si, oder mit der Zusammensetzung Ag-4Cu0-l,SGe-0,75Si.

13. Herstellung nach Anspruch 10 bis 12, bei dem ein Lot mit einem weiteren Zusatz von 10 bis 40 Vol.-% Al₂TiO₅, bevorzugt zwischen 20 bis 30 Vol- % Al₂TiO₅, eingesetzt wird.

14. Herstellung nach Anspruch 10 bis 13, bei dem die keramische Schicht durch ein thermisches Spritzverfahren, durch einen Sol-Gel-Prozess, durch PVD und/oder Sintern hergestellt wird.

15. Herstellung nach Anspruch 10 bis 13, bei der eine keramische Folie als keramische Schicht eingesetzt wird, die beidseitig eingelötet wird.

16. Herstellung nach Anspruch 10 bis 15, bei dem eine keramische Schicht aus Nickeloxid, Zirkondioxid, Aluminiumoxid, Magnesiumoxid oder Siliziumoxid, oder einer Mischung der vorgenannten Oxide, oder aus Aluminium-Magnesium-Spinell eingesetzt wird.

17. Herstellung nach Anspruch 16, bei der auf der keramischen Schicht zunächst zusätzlich eine Deckschicht aus einer Mischung aus AI-Mg-Spinell und Titan, bzw. einer Titanverbindung, aufgebracht wird.

18. Herstellung nach Anspruch 10 bis 17, bei dem das Lot als Lotpulver in einem Bindemittel suspendiert als Paste auf die keramische Schicht aufgebracht wird.

## Claims

1. Sealing arrangement for metal components, in which the sealing arrangement has an electrical insulating effect,
**characterised in that**,
the sealing arrangement comprises a ceramic layer as well as a basic soldering material arranged on it, which has an addition of germanium.

2. Sealing arrangement according to claim 1 with an addition of germanium in the range from 0.1 to 5.0 Mol-%, preferably between 0.5 and 2.5 Mol-%.

3. Sealing arrangement according to claim 1 or 2 with a further addition of silicon or a further addition of aluminium titanate.

4. Sealing arrangement according to one of claims 1 to 3 comprising solder with the composition Ag-2Cu0-1.5Ge-0.75Si or Ag-4Cu0-1.5Ge-0.75Si or Reactive Air Brazing (RAB) solder.

5. Sealing arrangement according to one of claims 1 to 4 with a ceramic layer applied by a thermal spraying process, Sol-Gel or PVD and then sintering.

6. Sealing arrangement according to one of claims 1 to 5 with a film soldered on both sides as a ceramic layer.

7. Sealing arrangement according to one of claims 1 to 6 with a ceramic layer comprising nickel oxide, zircon dioxide, aluminium oxide, magnesium oxide or silicon oxide or a mixture of the oxides indicated above or comprising an aluminium magnesium spinell.

8. Sealing arrangement according to claim 7 with a covering layer made of a mixture of aluminium magnesium spinell and titanium or a titanium compound arranged on the ceramic layer.

9. Use of a sealing arrangement according to one of claims 1 to 9 in a fuel cell stack, particularly in a high-temperature fuel cell stack.

10. Production of a sealing arrangement for a fuel cell stack comprising a ceramic layer and solder, in which the sealing arrangement has an electrical insulating effect,
**characterised in that**,
solder is arranged on the ceramic layer, which has an addition of germanium as well as the basic soldering material.

11. Production according to claim 10, in which solder with an addition of germanium in the range from 0.1 to 5.0 mol-%, preferably between 0.5 and 2.5 Mol-%, is used.

12. Production according to one of claims 10 to 11, in which solder is used, which has a further addition of silicon, or Reactive Air Brazing (RAB) solder or solder with the composition Ag-2Cu0-1.5Ge-0.75Si or with the composition Ag-4Cu0-1.5Ge-0.75Si.

13. Production according to claims 10 to 12, in which solder with a further addition of 10 to 40 Vol.-% Al₂TiO₅, preferably between 20 to 30 Vol- % Al₂Ti0₅, is used.

14. Production according to claims 10 to 13, in which the ceramic layer is produced by a thermal spraying process, Sol-Gel process, PVD and/or sintering.

15. Production according to claims 10 to 13, in which a ceramic film is used as a ceramic layer, which is soldered on both sides.

16. Production according to claims 10 to 15, in which a ceramic layer made of nickel oxide, zircon dioxide, aluminium oxide, magnesium oxide or silicon oxide or a mixture of the oxides indicated above or an aluminium magnesium spinell is used.

17. Production according to claim 16, in which a covering layer made of a mixture of Al-Mg spinell and titaniuim or a titanium compound is then also applied to the ceramic layer.

18. Production according to claims 10 to 17, in which the solder is suspended as a soldering powder in a binding agent and applied as a paste to the ceramic layer.

## Revendications

1. Dispositif d'étanchéité pour des composants métalliques, ledit dispositif d'étanchéité possédant un effet d'isolement électrique,
**caractérisé en ce**
**que** le dispositif d'étanchéité comprend une couche céramique ainsi que, disposé sur celle-ci, un matériau de base de brasure qui présente un ajout de germanium.

2. Dispositif d'étanchéité selon la revendication 1, présentant un ajout de germanium dans la plage de 0,1 à 5,0 % en moles, de préférence de 0,5 à 2,5 % en moles.

3. Dispositif d'étanchéité selon la revendication 1 ou la revendication 2, présentant en outre un ajout de silicium ou un ajout de titanate d'aluminium.

4. Dispositif d'étanchéité selon l'une des revendications 1 à 3, comprenant une brasure ayant la composition Ag-2CuO-1,5Ge-0,75Si ou Ag-4CuO-1,5Ge-0,75Si ou une brasure Reactive Air Brazing (RAB).

5. Dispositif d'étanchéité selon l'une des revendications 1 à 4, comprenant une couche céramique déposée par un procédé de thermo-injection, un procédé sol-gel ou un procédé de dépôt physique en phase vapeur suivi d'un frittage.

6. Dispositif d'étanchéité selon l'une des revendications 1 à 5, comprenant comme couche céramique une feuille intégrée par brasage des deux côtés.

7. Dispositif d'étanchéité selon l'une des revendications 1 à 6, avec une couche céramique qui contient de l'oxyde de nickel, du dioxyde de zirconium, de l'oxyde d'aluminium, de l'oxyde de magnésium ou de l'oxyde de silicium, ou un mélange des oxydes précités, ou qui contient un spinelle d'aluminium et de magnésium.

8. Dispositif d'étanchéité selon la revendication 7, comprenant une couche de recouvrement, disposée sur la couche céramique, faite d'un mélange de spinelle d'aluminium et de magnésium, et de titane ou d'un composé de titane.

9. Utilisation d'un dispositif d'étanchéité selon l'une des revendications 1 à 8, dans un empilement de piles à combustible, en particulier dans un empilement de piles à combustible à haute température.

10. Fabrication d'un dispositif d'étanchéité pour un empilement de piles à combustible, comprenant une couche céramique ainsi qu'une brasure, le dispositif d'étanchéité possédant un effet d'isolement électrique, **caractérisée en ce qu'**une brasure qui, en plus d'un matériau de base de brasure, présente un ajout de germanium est disposée sur la couche céramique.

11. Fabrication selon la revendication 10, dans laquelle on utilise une brasure qui comprend un ajout de germanium dans la plage de 0,1 à 5,0 % en moles, de préférence de 0,5 à 2,5 % en moles.

12. Fabrication selon l'une des revendications 10 à 11, dans laquelle on utilise une brasure qui présente en outre un ajout supplémentaire de silicium ou une brasure Reactive Air Brazing (RAB) ou une brasure ayant la composition Ag-2CuO-1,5Ge-0,75Si ou ayant la composition Ag-4CuO-1,5Ge-0,75Si.

13. Fabrication selon l'une des revendications 10 à 12, dans laquelle on utilise une brasure présentant en outre un ajout supplémentaire de 10 à 40 % en volume d'Al₂TiO₅, de préférence de 20 à 30 % en volume d'Al₂TiO₅.

14. Fabrication selon l'une des revendications 10 à 13, dans laquelle la couche céramique est réalisée par un procédé de thermo-injection, par un procédé sol-gel, par dépôt physique en phase vapeur et/ou frittage.

15. Fabrication selon l'une des revendications 10 à 13, dans laquelle on utilise comme couche céramique une feuille céramique qui est intégrée par brasage des deux côtés.

16. Fabrication selon l'une des revendications 10 à 15, dans laquelle on utilise une couche céramique en oxyde de nickel, dioxyde de zirconium, oxyde d'aluminium, oxyde de magnésium ou oxyde de silicium, ou un mélange des oxydes précités, ou en spinelle d'aluminium et de magnésium.

17. Fabrication selon la revendication 16, dans laquelle on dépose d'abord en plus sur la couche céramique une couche de recouvrement faite d'un mélange de spinelle d'Al-Mg et de titane ou d'un composé de titane.

18. Fabrication selon l'une des revendications 10 à 17, dans laquelle la brasure est déposée sur la couche céramique sous la forme d'une pâte à base de poudre de brasure en suspension dans un liant.
